**Europäisches Patentamt**

**European Patent Office**

**Office européen des brevets**

(19)

(11) Veröffentlichungsnummer: **0 223 213 B1**

# EUROPÄISCHE PATENTSCHRIFT

(45) Veröffentlichungstag der Patentschrift: **29.04.92**

(51) Int. Cl.5: **H04M 17/02**, G07F 7/00

(21) Anmeldenummer: **86115841.8**

(22) Anmeldetag: **14.11.86**

(54) Verfahren zur Auswertung von auf Kreditkarten gespeicherten Einheiten.

(30) Priorität: **19.11.85 DE 3541014**

(43) Veröffentlichungstag der Anmeldung:
**27.05.87 Patentblatt 87/22**

(45) Bekanntmachung des Hinweises auf die
Patenterteilung:
**29.04.92 Patentblatt 92/18**

(84) Benannte Vertragsstaaten:
**AT CH DE LI**

(56) Entgegenhaltungen:
**EP-A- 0 088 639**

**TELCOM REPORT, Band 7, Nr. 2, März/April
1984, Seiten 151-154, Passau, DE; M. LUD-
WIG: "Öffentliches Kartentelefon Siemens
interset 300"**

(73) Patentinhaber: **SIEMENS AKTIENGESELL-
SCHAFT
Wittelsbacherplatz 2
W-8000 München 2(DE)**

(72) Erfinder: **Heberle, Wolfgang, Dipl.-Phys.
Äussere Münchener Strasse 9
W-8190 Wolfratshausen(DE)**
Erfinder: **Ludwig, Max, Dipl.-Ing. (FH)
Am Kornacker 18 b
W-8000 München 70(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung beinhaltet ein Verfahren zur Auswertung von auf Kreditkarten für Selbstverkäufer gespeicherten, verbrauchten Gebühreneinheiten eines Karteninhabers und einer zentralen Auswertestelle, insbesondere für mit einem Vermittlungsamt verbundene fernmeldetechnische Geräte, wobei die Kreditkarten mit persönlichen Identifikationsmerkmalen versehen sind.

In der Fernmeldetechnik gibt es bereits eine Kreditkarte für Vieltelefonierer, mit der man von Telefonzellen aus geführte Gespräche auf seine häusliche Telefonnummer abrechnen kann. Der Buchungsvorgang läuft dabei folgendermaßen ab:

Die öffentlichen Kartentelefone sind mit einem Konzentrator verbunden, an den die Karte die Nummer des Teilnehmers aussendet sowie die Zahl der Gebühreneinheiten, die bereits auf dieser Karte vertelefoniert wurden. Das geschieht nicht nach jedem Telefongespräch, weil die Einzelbuchungen zu teuer wären. Erst wenn die Zahl der verbrauchten Einheiten bei 40 bis 50 liegt, liefert die Karte automatisch die Einheitenzahl an den Konzentrator ab. Auf diese Weise fällt für 40 Anteile an Telefongebühren nur etwa ein Anteil an Buchungsgebühren an.

Diese Abbuchungsweise hat jedoch den schwerwiegenden Nachteil, daß die Kreditkarten manipulierbar sind, d. h. bei entsprechender Kenntnis kann der Karteninhaber durch Eingriffe in die Kreditkarte der zentralen Auswertestelle eine noch nicht erfolgte Abbuchung vortäuschen.

Ein weiteres Beispiel dafür, wie Gebühreneinheiten mittels einer Telefonkarte bezahlt werden können, ist aus dem Dokument "Telecom Report, Band 7, Nr 2, März/April 1984, Seiten 151 - 154" bekannt
Aufgabe der vorliegenden Erfindung ist es daher, ein Auswerteverfahren aufzuzeigen, durch das erfolgversprechende Manipulationen an der Karte ausgeschlossen sind.

Diese Aufgabe wird dadurch gelöst, daß die verbrauchten Gebühreneinheiten in zumindest einem auf der Kreditkarte angeordneten Zähler gespeichert werden, dessen aktueller Stand von der zentralen Auswertestelle aus in dem Karteninhaber unbekannten insbesondere zufallsorientierten Intervallen abgerufen und anschließend in der Auswertestelle mit dem zuletzt abgerufenen Zählerstand verglichen wird, wobei das Konto des Karteninhabers mit der Differenz zwischen den alten und den neuen Gebühreneinheiten belastet wird.

Im Gegensatz zu dem zuvor beschriebenen Abbuchungsverfahren, bei dem bei einem bestimmten Zählerstand der Karte diese den Stand an die zentrale Auswertestelle geliefert hat, erfolgt das Abfragen des Zählerstandes bei dem erfindungsgemäßen Verfahren nunmehr von Seite der zentralen Auswertestelle und zwar in unregelmäßigen, zufallsgesteuerten Intervallen. Dabei wird jeweils der augenblickliche ermittelte mit dem zuvor ermittelten Zählerstand verglichen und mit der Differenz das Gebührenkonto des Kontoinhabers belastet.

Eine entsprechende Kreditkarte zur Durchführung dieses Verfahrens kann z. B. außer den Identifikationsmerkmalen einen ersten Zähler aufweisen, mit dem ein zweiter Überlaufzähler gekoppelt ist. Die Zähler können dabei nach Art eines Rollenzählers so ausgebildet sein, daß nach Erreichen einer bestimmten Anzahl der Einheiten auf dem ersten Zähler dieser wieder gelöscht wird und nur eine Einheit auf den zweiten Zähler übertragen wird.

Die Erfindung soll im folgenden anhand eines Ausführungsbeispiels beschrieben werden.

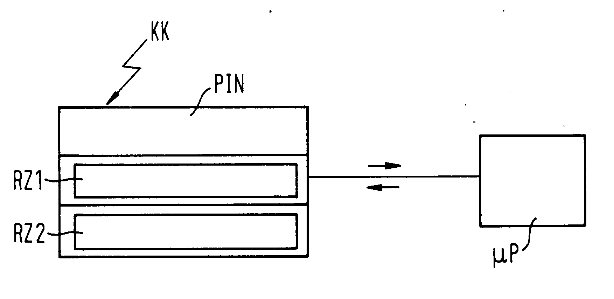

Die Abbildung zeigt schematisch eine mit einem Mikroprozessor verbundene Kreditkarte.

Auf einer Kreditkarte KK sind im oberen Teil die persönlichen Merkmale des Kreditkarteninhabers gespeichert. Diese seiner Identifikation dienenden Merkmale (PIN = Personal Identification Number) können z. B. aus einer mehrstelligen Ziffer bestehen, wobei der Karteninhaber bei jeder neuen Eingabe der Karte in ein entsprechendes Gerät einen entsprechenden nur ihm bekannten Code eingeben muß. Auf der Kreditkarte KK befinden sich weiter ein erster Zähler RZ1 und ein zweiter mit diesem gekoppelter Zähler RZ2. Dieser erste Zähler kann z. B. eine Kapazität von 200 Gebühreneinheiten besitzen, während der zweite Zähler ein Vielfaches dieser 200 Gebühreneinheiten aufweist, d. h. wenn auf dem ersten Zähler 200 Gebühreneinheiten verbraucht sind, wird auf den zweiten Zähler lediglich eine verbrauchte Einheit registriert und der erste Zähler wieder zurückgesetzt.

Das erfindungsgemäße Verfahren zur Auswertung von Einheiten besteht nun darin, daß ein Mikroprozessor $\mu P$ in unregelmäßigen, zufallsorientierten Intervallen die auf der Kreditkarte aufgelaufenen Zählerstände der Zähler RZ1 und RZ2 abruft. Durch Vergleich des aktuellen Zählerstandes mit dem zuvor ermittelten Zählerstand wird die Differenz ermittelt und mit diesem Betrag das Konto des Karteninhabers belastet.

## Bezugszeichenliste

| KK | Kreditkarte |
|---|---|
| RZ1 | erster Zähler |
| RZ2 | zweiter Zähler |
| $\mu P$ | Mikroprozessor |

## Patentansprüche

1. Verfahren zur Auswertung von auf Kreditkarten für Selbstverkäufer gespeicherten, verbrauchten Gebühreneinheiten eines Karteninhabers und einer zentralen Auswertestelle, insbesondere für mit einem Vermittlungsamt verbundene fernmeldetechnische Geräte, wobei die Kreditkarte mit persönlichen Identifikationsmerkmalen versehen ist, **dadurch gekennzeichnet,** daß die verbrauchten Gebühreneinheiten in zumindest einem auf der Kreditkarte angeordneten Zähler (RZ1, RZ2) gespeichert werden, dessen aktueller Stand von der zentralen Auswertestelle ($\mu$P) aus in dem Karteninhaber unbekannten insbesondere zufallsorientierten Intervallen abgerufen und anschließend in der Auswertestelle mit dem zuletzt abgerufenen Zählerstand verglichen wird, wobei das Konto des Karteninhabers mit der Differenz zwischen den alten und den neuen Gebühreneinheiten belastet wird.

2. Kreditkarte zur Durchführung des Verfahrens nach Anspruch 1, **dadurch gekennzeichnet,** daß außer den auf der Kreditkarte angeordneten Identifikationsmerkmalen des Karteninhabers ein erster Zähler (RZ1) angeordnet ist, der mit einem zweiten, auf der Karte angeordneten Überlaufzähler (RZ2) gekoppelt ist.

## Claims

1. Method for the evaluation of used fee units of a cardholder stored on credit cards for automatic vendors and a central evaluation site, preferably for telecommunications equipment connected to an exchange, the credit card being provided with personal identification features, characterised in that the used fee units are stored in at least one counter (RZ1, RZ2) arranged on the credit card, the current reading of which is called up from the central evaluation site ($\mu$P) at preferably random intervals unknown to the cardholder and is then compared in the evaluation site with the last counter reading called up, the account of the cardholder being charged with the difference between the old and the new fee units.

2. Credit card for carrying out the method according to Claim 1, characterised in that, in addition to the identification features of the cardholder arranged on the credit card, a first counter (RZ1) is also arranged, which is connected to a second overflow counter (RZ2) arranged on the card.

## Revendications

1. Procédé pour évaluer des unités de taxe utilisées, mémorisées sur des cartes de crédit pour des distributeurs automatiques, par un détenteur d'une carte, avec un poste central d'évaluation, notamment pour des appareils de la technique des télécommunications, qui sont raccordés à un central, la carte de crédit comportant des caractéristiques personnelles d'identification, caractérisé par le fait que les unités de taxe utilisées sont mémorisées dans au moins un compteur (RZ1,RZ2), qui est présent sur la carte de crédit et dont l'état actuel est appelé par le poste central d'évaluation ($\mu$P) à des intervalles inconnus du détenteur de la carte et notamment aléatoires et est ensuite comparé, dans le poste d'évaluation, à l'état de comptage appelé en dernier lieu, le compte du détenteur de la carte étant chargé par la différence entre les anciennes unités de taxe et les nouvelles unités de taxe.

2. Carte de crédit pour la mise en oeuvre du procédé suivant la revendication 1, caractérisée par le fait qu'en plus des caractéristiques d'identification du détenteur de la carte, qui sont prévues sur la carte de crédit, il est prévu un premier compteur (RZ1) qui est couplé à un second compteur à dépassement de capacité (RZ2) présent sur la carte.

KK

PIN

RZ1

RZ2

μP